# EUROPÄISCHE PATENTSCHRIFT

(11) **EP 3 970 912 B1**
(45) Veröffentlichungstag und Bekanntmachung des Hinweises auf die Patenterteilung: **17.06.2026**
(21) Anmeldenummer: 21197056.1
(22) Anmeldetag: 16.09.2021
(51) Int. Cl.: B23Q 11/04, B23Q 16/02

(54) **DREHVORRICHTUNG**
ROTATION DEVICE
DISPOSITIF ROTATIF

(30) Priorität: 18.09.2020 DE 102020124421
(43) Veröffentlichungstag der Anmeldung: 23.03.2022
(73) Patentinhaber: TAKTOMAT kurvengesteuerte Antriebssysteme GmbH, 86554 Pöttmes (DE)
(72) Erfinder: Hofstetter, Norbert, 86676 Hollenbach (DE)
(74) Vertreter: Glück Kritzenberger Patentanwälte PartGmbB

(56) Entgegenhaltungen:
- EP-A1- 2 093 642
- IT-A1- UA20 164 948

## Beschreibung

Die Erfindung bezieht sich auf eine Drehvorrichtung zur Aufnahme von wenigstens einer Bearbeitungs- und Handlingseinheit.

Derartige Drehvorrichtungen, die dem Fachmann auch als Drehtische bekannt sind, werden üblicherweise für die Herstellung und/oder Bearbeitung und/oder Verarbeitung von Werkstücken verwendet. Insbesondere werden derartige Drehvorrichtungen auch als Rundtakttische für schrittweise Arbeitsfolgen und Fertigungsprozesse verwendet, wobei sich solcherart ausgebildete Drehvorrichtungen sowohl für den horizontalen Einsatz als auch für den Vertikalbetrieb eignen.

Beispielsweise werden derartige Drehvorrichtungen als Rundtakttische in Fertigungsstra-ßen der Automobilindustrie verwendet, um auf Trägergestellen beförderte Fahrzeugkarosserien insbesondere während der einzelnen Montageschritte an den entsprechenden Montagepositionen von den Trägergestellen auf durch Bearbeitungs- und Handlingseinheiten gebildete indexierte Halteposition abzusenken.

Mithin können derartige Drehtische u.a. einen um eine Dreh- oder Schwenkachse rotierenden Drehkörper aufweisen, an dem beispielsweise die wenigstens eine Bearbeitungs- und Handlingseinheit angeordnet ist. Hierfür können die Drehvorrichtungen durch einen Antrieb gesteuert angetrieben werden. Insbesondere muss die gesteuerte Antriebsbewegung dabei den Drehkörper um einen sehr exakt vorgegebenen Schrittwinkel weiterbewegen, also weiterdrehen. In der anschließend erreichten Halteposition, in der dann beispielsweise die Bearbeitung des Werkstückes erfolgt, müssen der Drehkörper bzw. die daran angeordnete Bearbeitungs- und Handlingseinheit weitgehend spielfrei, d.h. lagefixiert, arretiert werden.

Gefordert wird für derartige Drehvorrichtungen damit eine hohe Genauigkeit und Spielfreiheit des Antriebs, so dass jede erforderliche Dreh- oder Winkelstellung des Drehkörpers bzw. der daran angeordneten Bearbeitungs- und Handlingseinheit mit hoher Präzision angefahren werden kann.

Aus der auf die Anmelderin zurückgehenden Druckschrift DE 10 2013 109 307 A1 ist dabei eine Drehvorrichtung mit einer Aufnahme zur Aufnahme eines Werkstückes oder Werkzeuges bekannt geworden, bei der die Aufnahme durch einen Antrieb gesteuert um eine Aufnahmeachse schenk- oder drehbar ist und bei der der Antrieb als Antriebselement einen Torquemotor aufweist. Die Druckschrift DE 10 2013 109 307 A1 zeichnet sich dadurch aus, dass mit einer Ausgangswelle des Torquemotors eine Trommelkurve unmittelbar verbunden ist, die eine Achse der Ausgangswelle wendelartig umschließt und in die für den Antrieb der Aufnahme mit dieser verbundene Mitnehmer eingreifen. In anderen Worten wird also die um eine Aufnahmeachse drehbar gelagerte Aufnahme indirekt über den Torquemotor angetrieben, indem dieser eine lotrecht zur Aufnahmeachse drehende Trommelkurve antreibt, indem an der Aufnahme vorgesehene Mitnehmer in die Trommelkurve eingreifen.

Bei derartigen aus dem Stand der Technik bekannten Drehtischen kann nicht ausgeschlossen werden, dass die an dem Drehkörper vorgesehenen Bearbeitungs- und Handlingseinheiten bei Drehung des Drehtisches mit einem zu hohen Drehmoment weitere Bauteile oder Baugruppen der Fertigungsstraße beschädigt, indem die Bearbeitungs- und Handlingseinheiten mit einer zu großen Kraft bzw. Drehmoment gegen die weitern Bauteile oder Baugruppen der Fertigungsstraße stoßen.

Eine Drehvorrichtung zur Aufnahme von wenigstens einer Bearbeitungs- und Handlingseinheit gemäß Oberbegriff Patentanspruch 1 ist dabei aus der IT UA20 164 948 A1 bekannt geworden.

Aufgabe der Erfindung ist es daher, eine Drehvorrichtung zur Aufnahme von wenigstens einer Bearbeitungs- und/oder Handlingseinheit aufzuzeigen, welches diese Nachteile aus dem Stand der Technik vermeidet.

Diese Aufgabe wird durch eine Drehvorrichtung zur Aufnahme von wenigstens einer Bearbeitungs- und/oder Handlingseinheit mit den Merkmalen des Patentanspruches 1 gelöst. Die Unteransprüche betreffen dabei besonders vorteilhafte Ausführungsvarianten der Erfindung.

Der wesentliche Aspekt der vorliegenden Erfindung ist darin zu sehen, eine Drehvorrichtung zur Aufnahme von wenigstens einer Bearbeitungs- und/oder Handlingseinheit vorzusehen, umfassend einen um eine Drehachse drehbar angeordneten Drehkörper zur Aufnahme der zumindest einen Bearbeitungs- und/oder Handlingseinheit. Dabei ist der Drehkörper zur Einleitung einer Drehbewegung über mehrere Mitnehmer mit einer wendelförmigen Trommelkurve in Eingriff bringbar. Zudem ist ein Antrieb vorgesehen, der die Trommelkurve direkt oder indirekt um eine Trommelachse motorisch antreibt. Erfindungsgemäß ist dabei vorgesehen, dass der Drehkörper zumindest ein Antriebsteil und ein relativ zu dem Antriebsteil um die Drehachse drehbares Abtriebsteil aufweist, wobei das Antriebsteil über zumindest eine Spanneinrichtung mit dem Abtriebsteil lösbar gekoppelbar ausgebildet ist. Damit kann das Abtriebsteil im Falle des Auftretens eines erhöhten Drehmoments, welches beispielsweise durch ein Anstoßen von an dem Abtriebsteil angeordneten Bearbeitungs- oder Handlingseinheiten an einem Bauteil oder Baugruppen der Fertigungsstraße verursacht sein kann, ausgekoppelt werden, wodurch eine Beschädigung sowohl des weiteren Bauteils, als auch der Drehvorrichtung an sich verhindert wird. Würde die Drehvorrichtung mit dann erhöhtem Drehmoment weiterdrehen, so könnte es zu mechanischen Beschädigungen der Bauteile der Drehvorrichtung durch Überlast kommen.

Gemäß einer vorteilhaften Ausführungsvariante kann dabei vorgesehen sein, dass die zumindest eine Spanneinrichtung zwischen einer Spannposition und einer Freigabeposition verstellbar ist, wobei die Spanneinrichtung in der Spannposition das Abtriebsteil drehfest mit dem Antriebsteil koppelt und in der Freigabeposition das Abtriebsteils von dem Antriebsteil um die gemeinsame Drehachse drehfrei gibt.

Gemäß einer weiteren vorteilhaften Ausführungsvariante kann dabei vorgesehen sein, dass bei der zumindest einen Spanneinrichtung das Auslösemoment, bei dem die Spanneinrichtung von der Spannposition in die Freigabeposition schaltet, einstellbar ausgebildet ist.

Gemäß einer weiteren vorteilhaften Ausführungsvariante kann dabei vorgesehen sein, dass das Antriebsteil und das Abtriebsteil jeweils kreisringförmig ausgebildet ist und dass das Antriebsteil und das Abtriebsteil koaxial um eine gemeinsame Drehachse unabhängig voneinander in der Freigabeposition drehbar angeordnet sind.

Gemäß einer weiteren vorteilhaften Ausführungsvariante kann dabei vorgesehen sein, dass der Drehkörper an einer Oberseite des Antriebsteils eine erste Drehebene und an der Oberseite des Abtriebsteils eine zweite Drehebene ausbildet, wobei die erste Drehebene vorzugsweise parallel beabstandet zu der zweiten Drehebene vorgesehen ist. Insbesondere ist dabei vorgesehen, dass sich der parallele Abstand zwischen den ersten und der zweiten Drehebene bei einem verstellen der Drehvorrichtung von der Freigabeposition in die Spannposition, oder umgekehrt, nicht ändert, also gleich bleibt.

Gemäß einer weiteren vorteilhaften Ausführungsvariante kann dabei vorgesehen sein, dass das Antriebsteil an einem ersten Ende eines Hohlwellenelement um die Drehachse drehbar gelagert aufgenommen ist, wobei das Hohlwellenelement sich zylindrisch entlang der Drehachse erstreckt und mittels einer an einer dem ersten Ende gegenüberliegenden zweiten Ende fest mit einem Gehäuse der Drehvorrichtung verbunden ist.

Gemäß einer weiteren vorteilhaften Ausführungsvariante kann dabei vorgesehen sein, dass das Hohlwellenelement eine zentrische Durchgangsöffnung aufweist, durch die Energieversorgungsleitungen an die an dem Abtriebsteil vorgesehenen Bearbeitungs- und/oder Handlingseinheit geführt werden können.

Gemäß einer weiteren vorteilhaften Ausführungsvariante kann dabei vorgesehen sein, dass zwischen dem Antriebsteil und dem Abtriebsteil eine Lageranordnung vorgesehen ist, so dass das Abtriebsteil in der ausgekoppelten Freigabeposition der zumindest einen Spanneinrichtung relativ zu dem Antriebsteil um die Drehachse unabhängig von dem Antriebsteil drehbar ausgebildet ist.

Gemäß einer weiteren vorteilhaften Ausführungsvariante kann dabei vorgesehen sein, dass die Lageranordnung außenumfangsseitig an dem Antriebsteil einen ersten Lagerring, innenumfangsseitig an dem Abtriebsteil einen zweiten Lagerring sowie einen zwischen dem ersten und dem zweiten Lagerring angeordneten Wälzkörper aufweist.

Gemäß einer weiteren vorteilhaften Ausführungsvariante kann dabei vorgesehen sein, dass über die verstellbare Vorspannung des Federelements das in der Spannposition übertragbare Drehmoment zwischen dem Antriebsteil und dem Abtriebsteil einstellbar ist und somit das Auslösemoment eingestellt wird, bei dem die Spanneinrichtung von der Spannposition in die Freigabeposition schaltet.

Gemäß einer weiteren vorteilhaften Ausführungsvariante kann dabei vorgesehen sein, dass die mehreren Spanneinrichtungen jeweils identisch zueinander ausgebildet sind.

Gemäß einer weiteren vorteilhaften Ausführungsvariante kann dabei vorgesehen sein, dass die mehreren Spanneinrichtungen derart um die Drehachse verteilt angeordnet sind, dass sich eine eindeutige relative Drehposition des Antriebsteils gegenüber dem Abtriebsteil einstellt, bei der sämtliche Spannvorrichtungen von ihrer Freigabeposition in ihre entsprechende Spannposition verstellbar sind.

Gemäß einer weiteren vorteilhaften Ausführungsvariante kann dabei vorgesehen sein, dass sich je relativer Umdrehung von 360° Grad des Abtriebsteils gegenüber dem Antriebsteil eine einzige eindeutige Drehposition einstellt, bei der sämtliche Spannvorrichtungen von ihrer Freigabeposition in ihre entsprechende Spannposition verstellbar sind.

Gemäß einer weiteren vorteilhaften Ausführungsvariante kann dabei vorgesehen sein, dass der Drehkörper, bestehend aus Antriebsteil, Abtriebsteil und zumindest einer Spanneinrichtung, als in sich abgeschlossene Baugruppe ausgebildet ist, die ohne großen Montageaufwand getauscht und/oder nachgerüstet werden kann.

Unter "getaktet" wird im Rahmen der vorliegenden Erfindung eine intermittierende Bewegung verstanden, die sich im Gegensatz zu einer kontinuierlichen Bewegung durch schrittweise oder periodisch wiederkehrende Bewegungsabläufe auszeichnen, und zwar mit einem Stillstand nach oder vor jedem Bewegungsschritt. Ein intermittierend bewegtes Element, das beispielsweise eine, um einen gewissen Winkelbetrag rotierende Abtriebswelle einer Torque-Motor-Einheit sein kann, vollzieht hierbei ein Bewegungsprofil, bei dem die Abtriebswelle periodisch nahezu stoß- und/oder ruckfrei auf eine gewisse Winkelgeschwindigkeit beschleunigt und anschließend wieder abgebremst wird.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block- oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparates) wie z. B. einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Die Erfindung wird im Folgenden anhand der Figuren an Ausführungsbeispielen näher erläutert. Es zeigen:

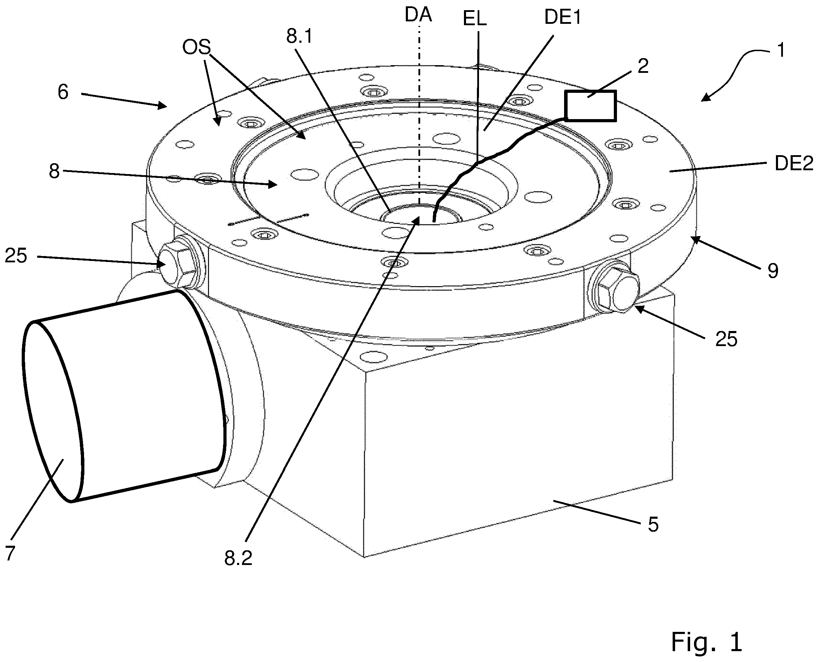

- Fig. 1: in vereinfachter perspektivischer Darstellung eine beispielhafte Ausführungsvariante einer erfindungsgemäßen Drehvorrichtung,
- Fig. 2: eine grob schematische Seitenansicht einer weiteren beispielhaften Ausführungsvariante einer erfindungsgemäßen Drehvorrichtung,
- Fig. 3a: eine grob schematische Draufsicht auf eine Ausführungsvariante eines im Schnitt dargestellten Drehkörpers,
- Fig. 3b: eine grob schematische Seitenansicht eines teilweise im Schnitt dargestellten Drehkörpers
- Fig. 4: eine Ausführungsvariante einer beispielhaften, freigestellten Trommelkurve in perspektivischer Darstellung,
- Fig. 5: die freigestellte Trommelkurve gemäß Figur 4 mit darin aufgenommenem Torquemotor in einer Schnittdarstellung durch eine Schnittebene entlang der Trommelachse.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind. Auch ist die Erfindung in den Figuren nur als schematische Ansicht zur Erläuterung der Arbeitsweise dargestellt. Insbesondere dienen die Darstellungen in den Figuren nur der Erläuterung des grundlegenden Prinzips der Erfindung. Aus Gründen der Übersichtlichkeit ist darauf verzichtet worden, alle Bestandteile der Vorrichtung zu zeigen.

In den Figuren ist mit 1 eine beispielhafte Ausführungsvariante einer erfindungsgemäßen Drehvorrichtung zur Aufnahme von wenigstens einer Bearbeitungs- und/oder Handlingseinheit 2 gezeigt, die einen um eine Drehachse DA drehbar angeordneten Drehkörper 6 zur Aufnahme der zumindest einen Bearbeitungs- und/oder Handlingseinheit 2 aufweist. Bei den nur stilisiert in den Figuren dargestellten Bearbeitungs- und Handlingseinheiten 2 kann es sich insbesondere um Bodenspanner handeln, die beispielsweise verwendet werden, um auf Trägergestellen entlang einer Montagelinie beförderte Fahrzeugkarosserien insbesondere während der einzelnen Montageschritte an den entsprechenden Montagepositionen von den Trägergestellen auf die entsprechenden an einer Drehvorrichtung 1 angeordneten Bodenspanner abzusenken.

In der Regel sind hierfür je nach Fahrzeugtyp, bzw. Fahrzeugkarosse zwischen vier und sechs Bodenspanner, und damit auch vier bis sechs Drehvorrichtungen 1 erforderlich, die um ein sich in einer Montageposition befindliches Trägergestell angeordnet sind. Vorzugsweise sind dabei jeweils zwei Drehtischsysteme 1 an entlang der Längsseite des Trägergestells gegenüberliegenden Positionen vorgesehen, beispielsweise derart, dass die entsprechende Karosserie sowohl in ihrem vorderen, als auch hinteren Bereich auf jeweils zwei gegenüberliegenden oder im Wesentlichen gegenüberliegen Auflagepunkten abgesenkt werden kann.

Vorzugsweise können an einer Drehvorrichtung 1 mehrere Bearbeitungs- und Handlingseinheiten 2, beispielsweise unterschiedliche Bodenspanner, vorgesehen sein, die beispielsweise an unterschiedliche Abmessungen der Fahrzeugkarossen bzw. Fahrzeugtypen angepasst sind. Die mehreren Bearbeitungs- und Handlingseinheiten 2 sind an einem Drehkörper 6 fest, jedoch austauschbar, beispielsweise verschraubt, angeordnet. Die mehreren Bearbeitungs- und Handlingseinheiten 2 können in gleichmäßigen oder näherungsweise gleichmäßigen Winkelabständen um die Dreh- oder Schwenkachse DA verteilt an dem Drehkörper 6 angeordnet sein, in beispielsweise einen gleichen radialen Abstand zur die Drehachse DA. Besonders vorteilhaft sind vier Bearbeitungs- und Handlingseinheiten 2 an dem Drehkörper 6 vorgesehen, wobei die Bearbeitungs- und Handlingseinheiten 2 jeweils paarweise gegenüberliegend an dem Drehkörper 6 angeordnet sind. Erfindungsgemäß weist der Drehkörper 6 zumindest ein Antriebsteil 8 und ein relativ zu dem Antriebsteil 8 um die Drehachse DA drehbares Abtriebsteil 9 auf, wobei das Antriebsteil 8 über zumindest eine Spanneinrichtung 25 mit dem Abtriebsteil 9 lösbar koppelbar ausgebildet ist. Dabei sind die Bearbeitungs- und Handlingseinheiten 2 insbesondere an dem Abtriebsteil 9 des Drehkörpers 6 aufgenommen, insbesondere angeordnet.

Gemäß einer beispielhaften Ausführungsvariante ist der Drehkörper 6 zur Einleitung einer Drehbewegung um die Drehachse DA über mehrere Mitnehmer 4 mit einer wendelförmigen Trommelkurve 3 direkt in Eingriff bringbar, die um eine zur Drehachse DA lotrecht orientierte Trommelachse TA direkt oder indirekt antreibbar ausgebildet ist. Insbesondere weist der Drehkörper 6 die mehreren Mitnehmer 4 an einer den Bearbeitungs- und Handlingseinheiten 2 gegenüberliegenden Unterseite auf. Mehr im Detail sind die Mitnehmer 4 an dem Antriebsteil 8 des Drehkörpers 6 angeordnet. Die Trommelkurve 3 ist in einem Gehäuse 5 aufgenommen und um eine Trommelachse TA motorisch mittels eines Antriebs 7 drehbar antreibbar ausgebildet.

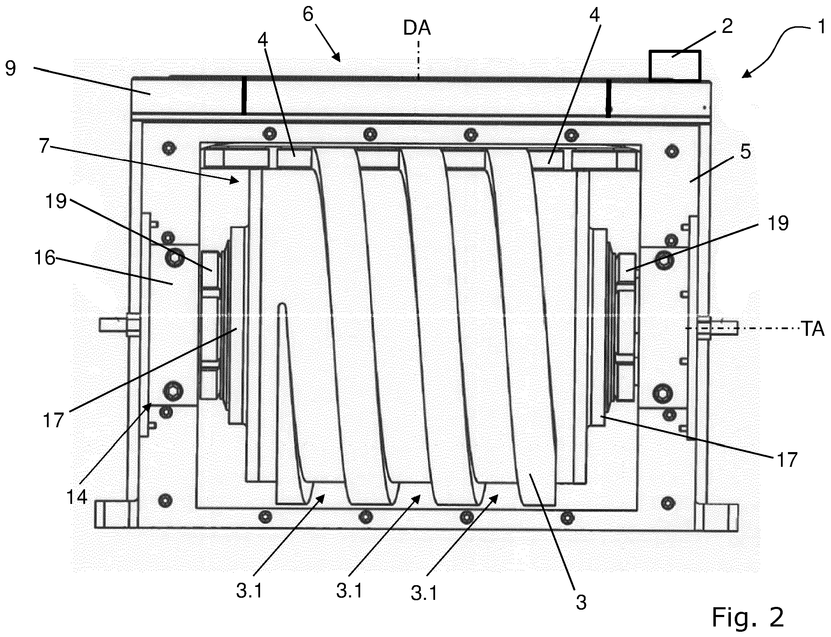

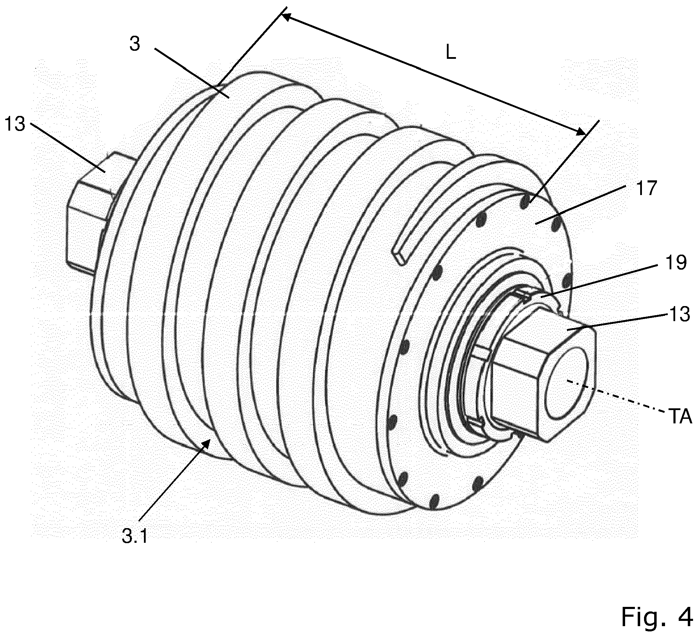

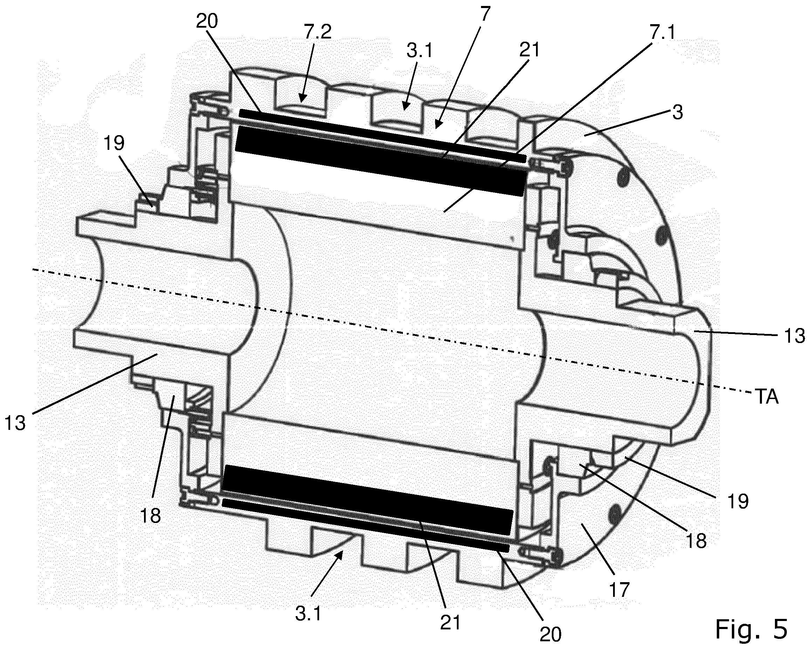

Die Trommelkurve 3 kann mittels des motorischen Antriebs 7 mittelbar, beispielsweise unter Zwischenschaltung eines Getriebes, oder in der nachstehend noch nähergehend erläuterten Weise unmittelbar, also ohne Zwischengetriebe, angetrieben werden. Dabei kann das Getriebe als Umlenk- oder Winkelgetriebe, beispielsweise als Stirnrad- oder Planetengetriebe ausgebildet sein, das eine Drehbewegung insbesondere um 90° Grad umlenkt. Ein Direktantrieb der Trommelkurve 3, also ein Antrieb 7 ohne Zwischenschaltung eines Getriebes zeigen die Figuren 2, 4 und 5. Der Antrieb 7 kann dabei als elektrischer Antriebsmotor, insbesondere als Drehstrommotor oder Servoantrieb, insbesondere als Gleichstrommotor, Asynchronmotor oder Synchronmotor ausgebildet sein. Besonders vorteilhaft ist der Antrieb 7 als Torquemotor ausgebildet.

Unabhängig von der Ausbildung der Antriebs 7 können die Mitnehmer 4 dabei als Kurvenrollen ausgebildet sein, die drehbar gelagert an dem Drehkörper 6, insbesondere an dem Antriebsteil 8, angeordnet sind. Vorzugsweise sind die mehreren Mitnehmer 4 in gleichen oder näherungsweise gleichen Winkelabständen um die Drehachse DA verteilt an dem Drehkörper 6, insbesondere an dem Antriebsteil 8, angeordnet, und zwar vorzugsweise kreis- bzw. sternförmig um die Drehachse DA verteilt.

In anderen Worten liegen die Mitnehmer 4 also mit ihren jeweiligen Mittelachsen, um die sie jeweils drehbar an dem Drehkörper 6, insbesondere an dem Antriebsteil befestigt sind, auf einem gemeinsamen Radius von der Drehachse DA entfernt. Mehr im Detail sind die Mitnehmer 4 an der den Bearbeitungs- und Handlingseinheiten 2 gegenüberliegenden Unterseite des Drehkörpers 6, also an der der Trommelkurve 3 zugewandten Seite des Drehkörpers 6, insbesondere des Antriebsteils 8, vorgesehen.

Wie bereits obenstehend erwähnt, kann dabei der Antrieb 7 der Drehvorrichtung 1 zum motorischen Antrieb der Trommelkurve 3 beispielsweise als Torquemotor mit einem Stator 7.1 sowie einem relativ dazu um die Trommelachse TA drehbar angetriebenen Rotor 7.2 ausgebildet sein, wie dies in den Figuren 2, 4 und 5 gezeigt ist.

Der Antrieb 7 in Form eines Torquemotors kann dabei mehr im Detail als Außenläufer ausgebildet sein, bei dem der ruhende, innenliegende Stator 7.1 von dem dazu relativ rotierenden, außenliegenden Rotor 7.2 umschlossen ist. Ferner kann sich diese Form des Antriebs 7 auch dadurch auszeichnen, dass der um die Trommelachse TA rotierende Rotor 7.2 an seiner dem innen liegenden Stator 7.1 abgewandten Außenmantelfläche die Trommelkurve 3 aufweist. Dabei weist die Trommelkurve 3 einen durchgängig gewendelten, nutförmigen Gewindegang 3.1 mit einer vorzugsweise gleichmäßigen Steigung auf.

Der nutförmige Gewindegang 3.1 der Trommelkurve 3 kann aus einem gehärteten metallischen Werkstoff, beispielsweise einem gehärteten Stahl, gebildet sein. Zur Einleitung einer Drehbewegung von dem aktiv angetriebenen Rotor 7.2 des Torquemotors 7 auf das Antriebsteil 8 des Drehkörper 6, greifen die an der Unterseite des Antriebsteils 8 vorgesehenen Mitnehmer 4 in den gewendelten Gewindegang 3.1 der Trommelkurve 3 ein, die (Trommelkurve) ihrerseits drehfest an dem Rotor 7.2 vorgesehen ist. Es versteht sich, dass sämtliche im Zusammenhang des Direktantriebs beschriebenen Merkmale der Trommelkurve 3 soweit möglich und sinnvoll auch Gültigkeit für ein Antriebskonzept unter Zwischenschaltung eines Getriebes, insbesondere eines Umlenkgetriebes, besitzen.

Besonders vorteilhaft kann dabei der Rotor 7.2 an der Außenmantelfläche der Trommelkurve 3 ausbildet sein, indem der Rotor 7.2 und die Trommelkurve 3 einteilig, insbesondere einstückig, ausgebildet sind. In anderen Worten bildet also der Rotor 7.2 mit seiner Außenmantelfläche die Trommelkurve 3 aus, so dass Rotor 7.2 und Trommelkurve 3 als ein einstückiges Bauteil herstellbar ist.

Dabei kann der Stator 7.1 an seinen gegenüberliegenden Enden entlang der Trommelachse TA über jeweils seitlich an dem Stator 7.1 fest angeflanschte Befestigungsabschnitt 13 aus dem Bereich des Rotors 7.2 herausgeführt sein. Mittels den Befestigungsabschnitten 13 kann der Stator 7.1 lage- und drehfest innerhalb eines Gehäuse 5 aufgenommen sein. Die Befestigungsabschnitte 13 weisen an der jeweiligen Außenmantelfläche eine von der kreisform abweichende Geometrie auf, beispielsweise bilden die Befestigungsabschnitte 13 einen Vierkant aus.

Mehr im Detail können die Befestigungsabschnitte 13 jeweils in einer an die Außengeometrie angepasst Aufnahme 14 des Gehäuses 5 lage- und drehfest aufgenommen sein. Ferner kann der jeweilige Befestigungsabschnitt 13 mittels einer entsprechenden Adaptereinrichtung 16 in der zugehörigen Aufnahme 14 aufgenommen sein. Vorteilhaft ist somit vorgesehen, dass der Torquemotor 7 mittels dem feststehenden Stator 7.1 drehfest innerhalb, vorzugsweise vollständig innerhalb, des Gehäuses 5 aufgenommen ist.

Dabei kann der Rotor 7.2 an beiden freien Enden über einen kreisscheibenförmigen Gehäusering 17 jeweils über ein Lager 18 mittels einer Wellenmutter 19 an dem jeweiligen Befestigungsabschnitt 13 angeordnet sein und zwar relativ zu den Befestigungsabschnitten 13 drehbeweglich um die Trommelachse TA und damit drehbeweglich zu dem mit dem Befestigungsabschnitt 13 fest verbundenen Stator 7.1. Dabei kann auch vorgesehen sein, dass die beiden seitlich an dem Stator 7.1 fest angeflanschten Befestigungsabschnitte 13 Teil oder Bestandteil des Stators 7.1 sind, dass der Stator 7.1 also die Befestigungsabschnitte 13 aufweist.

Ferner vorteilhaft kann dabei der ruhende, ortsfeste Stator 7.1 vollständig innerhalb des Rotors 7.2 aufgenommen sein und den Rotor 7.2 seitlich lediglich mit seinen Befestigungsabschnitten 13 überragen. Der Stator 7.1 erstreckt sich dabei vorzugsweise zentrisch entlang der Trommelachse TA und damit zentrisch innerhalb des Rotors 7.2. Dabei kann jedoch vorgesehen sein, dass die Trommelachse TA der Trommelkurve 3 seitlich versetzt zur Drehachse DA des Drehkörpers 6 ausgebildet ist. Auch vorteilhaft kann der Rotor 7.2 eine Länge L entlang der Trommelachse TA aufweisen, die im Wesentlichen einem Durchmesser D des Drehkörper 6 entspricht, so dass eine möglichst kompakte Bauweise der erfindungsgemäßen Drehvorrichtung 1 erreicht wird. Weiterhin vorteilhaft entspricht dabei die Länge L des Rotors 7.2 im Wesentlichen der Länge der Trommelkurve 3 entlang der Trommelachse TA, so dass sich die Trommelkurve 3 über die gesamte Längserstreckung des Rotors 7.2 entlang der Trommelachse TA erstreckt.

Überdies können an einer Innenwandung des Rotors 7.2 ein oder mehrere Permanentmagnete 20 in gleichmäßigen oder näherungsweise gleichmäßigen Winkelabständen um die Trommelachse TA herum vorgesehen angeordnet sein. Beispielsweise kann der Permanentmagnet 20 als umlaufende Permanentmagnetschicht an der Innenwandung des Rotors 7.2 ausgebildet sein. Alternativ können an der Innenwandung des Rotors 7.2 auch mehrere Einzelpermanentmagnete 20 vorgesehen sein, wobei benachbarte Permanentmagnete 20 jeweils beabstandet und gegenpolig zueinander orientiert in der Innenwandung des Rotors 7.2 vorgesehen sind. Dabei kann auch vorgesehen sein, dass die Innenwandung des Rotors 7.2 aus einem hartmagnetischen Material, insbesondere einer Legierung aus Eisen, Cobalt, Nickel oder Ferriten, einteilig, insbesondere einstückig mit dem Rotor 7.2 hergestellt ist und die den einen oder die mehreren Permanentmagnete 20 ausbildet.

Mithin kann der feststehende Stator 7.1 mehrere Spulen 21 aufweisen, die mit dem einen oder mehreren Permanentmagneten 20 des Rotors 7.2 in Wirkverbindung stehen und den Torquemotor 7 ausbilden. Besonders vorteilhaft ist damit der Torquemotor 7 vollständig innerhalb der Trommelkurve 3, die gleichzeitig den Rotor 7.2 ausbildet, aufgenommen, so dass ein besonders kompakter konstruktiver Aufbau geschaffen ist.

Wie bereits erwähnt, weist der Drehkörper 6 zumindest ein Antriebsteil 8 und ein relativ zu dem Antriebsteil 8 um die Drehachse DA drehbares Abtriebsteil 9 auf, wobei das Antriebsteil 8 über zumindest eine Spanneinrichtung 25 mit dem Abtriebsteil 9 lösbar koppelbar ist. Vorteilhaft ist dabei in einer Spannposition SP der zumindest einen Spanneinrichtung 25 das Abtriebsteil 9 drehfest mit dem Antriebsteil 8 verbunden, während die zumindest eine Spanneinrichtung 25 in einer ausgekoppelten Freigabeposition FP das Abtriebsteils 9 von dem Antriebsteil 8 um die gemeinsame Drehachse DA derart drehbar freigibt, dass das Antriebsteil 8 unabhängig - also entkoppelt - von dem Abtriebsteil 9 drehbar ist.

Dabei ist sowohl das Antriebsteil 8 als auch das Abtriebsteil 9 kreisringförmig ausgebildet und über die zumindest eine Spanneinrichtung 25 koppelbar. Mehr im Detail bildet das Antriebsteil 8 einen inneren um die Drehachse DA drehbaren Kreisring und das Abtriebsteil 9 einen äußeren, ebenfalls um die Drehachse DA drehbaren Kreisring aus, so dass das Antriebsteil 8 und das Abtriebsteil 9 jeweils um die gemeinsame Drehachse DA drehbar ausgebildet sind. Insbesondere weist das als äußerer Kreisring ausgebildete Abtriebsteil 9 einen Innendurchmesser ID auf der größer ausgebildet ist als ein Außendurchmesser AD des als Kreisring ausgebildeten Antriebsteils 8. Vorteilhaft sind das kreisringförmige Antriebsteil 8 und das kreisingförmige Abtriebsteil 9 derart koaxial um die gemeinsame Drehachse DA angeordnet, dass das Abtriebsteil 9 das Antriebsteil 8 außenumfangsseitig vollumfänglich umgreift.

Insbesondere bildet der Drehkörper 6 an einer Oberseite OS des Antriebsteils 8 eine erste Drehebene DE1 und an der Oberseite OS des Abtriebsteils 9 eine zweite Drehebene DE2 aus. Die erste und zweite Drehebene DE1, DE2 verlaufen dabei vorzugsweise senkrecht oder näherungsweise senkrecht zu der Drehachse DA. Vorteilhaft ist die erste Drehebene DE1 parallel beabstandet zu der zweiten Drehebene DE2 vorgesehen. Insbesondere ist dabei vorgesehen, dass sich der parallele Abstand zwischen den ersten und der zweiten Drehebene DE1, DE2 bei einem verstellen der Drehvorrichtung 1 von der Freigabeposition FP in die Spannposition SP, oder umgekehrt, nicht ändert, also gleich bleibt. Vorteilhaft ist die erste Drehebene DE1 gegenüber der zweiten Drehebene DE2 in Richtung der Trommelkurve 3 versetzt vorgesehen, also unterhalb der zweiten Drehebene DE2 angeordnet. Damit werden die auf der zweiten Drehebene DE2 an dem Abtriebsteil 9 vorgesehenen Bearbeitungs- und/oder Handlingseinheit 2 in ihrer Drehbewegung nicht von dem Antriebsteil 8 beeinträchtigt.

Zur rotativen Lagerung des Antriebsteils 8 um die Drehachse DA ist das Antriebsteil 8 an einem ersten Ende eines Hohlwellenelement 8.1 drehbar gelagert aufgenommen, wobei das Hohlwellenelement 8.1 sich zylindrisch entlang der Drehachse DA erstreckt und mittels einer an einer dem ersten Ende gegenüberliegenden zweiten Ende fest mit dem Gehäuse 5 der Drehvorrichtung 1 verbunden ist. Das Hohlwellenelement 8.1 bildet dabei zusammen mit dem an dem Hohlwellenelement 8.1 drehbar angeordneten Antriebsteil 8 eine zentrische Durchgangsöffnung 8.2 aus, durch die beispielsweise Energieversorgungsleitungen EL an die an dem Abtriebsteil 9 vorgesehenen Bearbeitungs- und/oder Handlingseinheit 2 geführt werden können.

Ferner ist zwischen dem Antriebsteil 8 und dem Abtriebsteil 9 eine Lageranordnung 10 vorgesehen, so dass das Abtriebsteil 9 in der ausgekoppelten Freigabeposition FP der zumindest einen Spanneinrichtung 25 relativ zu dem Antriebsteil 8 drehbar um die Drehachse DA ausgebildet ist. In anderen Worten ist also zwischen dem Antriebsteil 8 und dem Abtriebsteil 9 eine Lageranordnung 10 vorgesehen, so dass das Antriebsteil 8 separat drehbar zu dem Abtriebsteil 9 um die gemeinsame Drehachse DA ausgebildet ist. Das Antriebsteils 8 gibt damit das Abtriebsteil 9 in der ausgekoppelten Freigabeposition FP der zumindest einen Spannvorrichtung 25 drehfrei um die gemeinsame Drehachse DA. Das Abtriebsteil 9 kann sich damit über die Lageranordnung 10 außenumfangsseitig um das Antriebsteil 8 drehen.

Mehr im Detail weist die Lageranordnung 10 außenumfangsseitig an dem Antriebsteil 8 einen ersten Lagerring 11 sowie innenumfangsseitig an dem Abtriebsteil 9 einen zweiten Lagerring 12 auf. Beide Lagerringe 11, 12 umschließen vollumfänglich den entsprechenden Innen- bzw. Außenumfang des zugehörigen Antriebs- und Abtriebsteils 8, 9. Zur drehbaren Lagerung des ersten Lagerrings 11 gegenüber dem zweiten Lagerring 12 sind zwischen den Lagerringen 11, 12 innen- bzw. außenumfangsseitig verteilt Wälzkörper WK, insbesondere in Form von Kugeln, vorgesehen. Somit wird durch die Lageranordnung 10 mit ihrem ersten und zweiten Lagerring 11, 12 zusammen mit den dazwischenliegenden Wälzkörpern WK ein Wälzlager ausgebildet. Somit sind sowohl das Antriebsteil 8 als auch das Abtriebsteil 9 axial lagefixiert und lediglich um die Drehachse DA drehbar ausgebildet.

Zur drehfesten, jedoch lösbaren Kopplung des Antriebsteils 8 mit dem Abtriebsteil 9 ist dabei die zumindest eine Spanneinrichtung 25 vorgesehen, die zwischen einer das Antriebsteil 8 mit dem Abtriebsteil 9 drehfest koppelnden Spannposition SP und der Freigabeposition FP verstellbar ist, wobei in der Freigabeposition FP das Abtriebsteil 9 von dem Antriebsteil 8 drehfrei kommt. Mehr im Detail ist dabei die zumindest eine Spanneinrichtung 25 dazu ausgebildet, das Auslösemoment, bei dem die Spanneinrichtung 25 von der Spannposition SP in die Freigabeposition FP schaltet, einstellbar auszubilden.

In der Spannposition SP verbindet dabei die zumindest eine Spannvorrichtung 25 das Antriebsteil 8 drehfest mit dem Abtriebsteil 9, während die zumindest eine Spannvorrichtung 25 in der Freigabeposition FP das Abtriebsteil 9 von dem Antriebsteil 8 entkoppelt.

Hierfür kann die zumindest eine Spanneinrichtung 25 in einer Öffnung 9.1 des Abtriebsteils 9 aufgenommen sein. Die Öffnung 9.1 kann als das kreisringförmige Abtriebsteil 9 in radialer Richtung vollständig durchdringende Zylinderbohrung ausgebildet sein. Die Längserstreckung der Öffnung 9.1 ist dabei radial auf die zentrische Drehachse DA gerichtet.

Dabei umfasst die zumindest eine Spanneinrichtung 25 ein Eingriffselement 26 das in einer Spannposition SP in koppelndem Wirkeingriff mit einer an dem Außenumfang des Antriebsteils 8 vorgesehenen Ausnehmung 27 steht. Insbesondere kann damit die Kopplung über einen Formschluss des Eingriffselementes 26 mit der korrespondierenden Ausnehmung 27 hergestellt werden. Vorzugsweise ist das Eingriffselement 26 als Kugel ausgebildet, die zumindest mit einer Teilfläche ihrer Außenumfangsfläche passgenau, insbesondere formschlüssig, in der korrespondierenden Ausnehmung 27 in der Spannposition SP aufgenommen ist.

Ferner umfasst die zumindest eine Spanneinrichtung 25 ein Federelement 28, das vorzugsweise als Druckfeder ausgebildet ist, und in der Öffnung 9.1 mittels einem Spannelement 29, beispielsweise einer Schraube, unter einer definierten Vorspannung gehalten ist. Über das Spannelement 29 kann dabei die auf das Federelement 28 wirkende Vorspannung und damit letztlich das Auslösemoment individuell eingestellt werden.

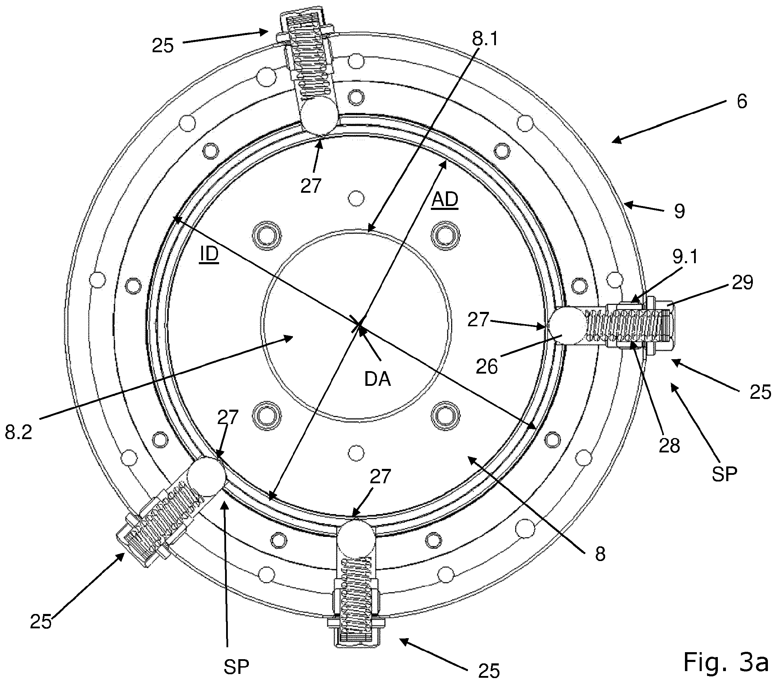

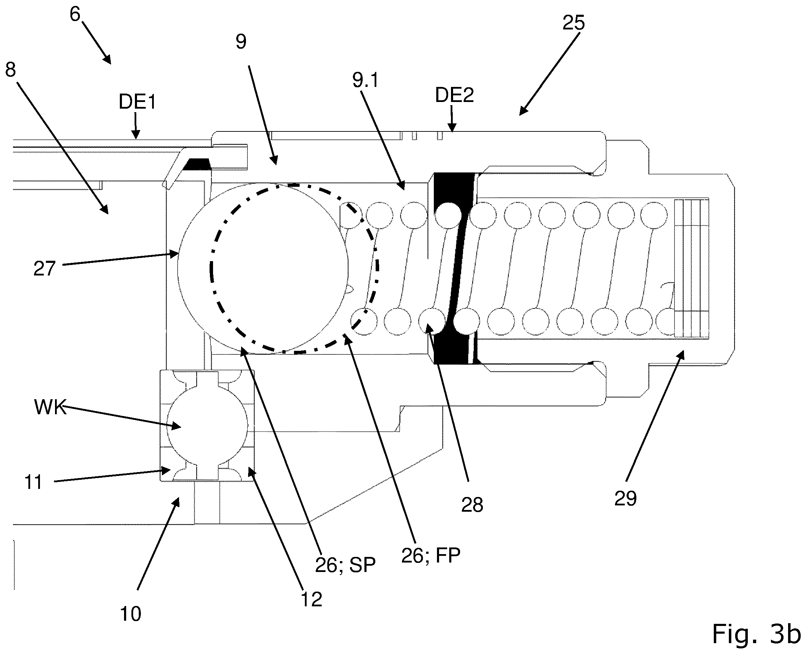

Insbesondere kann damit über das Federelement 28 das Eingriffselement 26 unter einer einstellbaren Federkraft in einer Spannposition SP in die Ausnehmung 27 gedrückt werden, wodurch das Abtriebsteils 9 drehfest an das Antriebsteil 8 gekoppelt ist. Letztlich wird über die einstellbare Federkraft des Federelements 28 das in der Spannposition SP übertragbare Drehmoment zwischen Antriebteil 8 und Abtriebsteil 9 definiert und somit das Auslösemoment eingestellt, zu dem die Spanneinrichtung 25 von der Spannposition SP in die Freigabeposition FP schaltet. Bei Überschreiten eines über die einstellbare Vorspannung des Federelements 28 übertragbaren Drehmoments von dem Antriebsteil 8 auf das Abtriebsteil 9 in der koppelnden Spannposition SP wird dabei das Eingriffselement 26 gegen die Federkraft des Federelements 28 aus der Ausnehmung 27 gedrückt und damit letztlich das Abtriebsteil 9 von dem Antriebsteil 8 entkoppelt (in Figur 3b mit gestrichelten Eingriffselement 26 angedeutet). Die zumindest eine Spanneinrichtung 25 gelangt damit bei Überschreiten eines einstellbaren Auslösemoments in ihre Freigabeposition FP (in Figur 3b mit gestrichelten Eingriffselement 26 angedeutet), in der sie das Abtriebsteil 9 von dem Antriebsteil 8 um die gemeinsame Drehachse DA derart drehbar freigibt, dass das Antriebsteil 8 unabhängig - also entkoppelt - von dem Abtriebsteil 9 drehbar ist.

Vorteilhaft sind dabei mehrere Spanneinrichtungen 25 vorgesehen, die jeweils in der Spannposition SP das Abtriebsteil 9 drehfest mit dem Antriebsteil 8 verbinden und in der ausgekoppelten Freigabeposition FP das Abtriebsteils 9 von dem Antriebsteil 8 um die gemeinsame Drehachse DA derart drehbar freigeben, dass das Antriebsteil 8 unabhängig - also entkoppelt - von dem Abtriebsteil 9 ausgebildet drehbar ist.

Vorteilhaft kann dabei vorgesehen sein, dass bei einer jeden der mehreren Spanneinrichtungen 25 das Auslösemoment, bei dem die jeweilige Spanneinrichtung 25 von der Spannposition SP in die Freigabeposition FP schaltet, separat einstellbar ist. Auch kann vorgesehen sein, dass die mehreren Spanneinrichtungen 25 jeweils identisch zueinander ausgebildet sind.

Ferner vorteilhaft kann vorgesehen sein, dass die mehreren Spanneinrichtungen 25 derart um die Drehachse DA verteilt angeordnet sind, dass sich eine eindeutige relative Drehposition des Antriebsteils 8 gegenüber dem Abtriebsteil 9 einstellt, bei der sämtliche Spannvorrichtungen 25 von ihrer Freigabeposition FP in ihre entsprechende Spannposition SP verstellbar sind.

In anderen Worten sind also die Spannvorrichtungen 25 so um die Drehachse DA verteilt vorgesehen, dass diese nur in einer möglichen Drehwinkelstellung wieder alle in Spannposition SP gelangen. Diese relative Drehposition bildet dabei eine Art Nullposition aus. Dabei kann vorgesehen sein, dass die mehreren Spanneinrichtungen 25 derart angeordnet sind, dass sich je relativer Umdrehung von 360°Grad des Abtriebsteils 9 gegenüber dem Antriebsteil 8 eine einzige eindeutige Drehposition einstellt, bei der sämtliche Spannvorrichtungen 25 von ihrer Freigabeposition FP in ihre entsprechende Spannposition SP verstellbar sind.

Gemäß einer weiteren vorteilhaften Ausführungsvariante kann dabei vorgesehen sein, dass der Drehkörper 6, bestehend aus Antriebsteil 8, Abtriebsteil 9 und zumindest einer Spanneinrichtung 25, als in sich abgeschlossene Baugruppe ausgebildet ist, die ohne großen Montageaufwand getauscht und/oder nachgerüstet werden kann.

### Bezugszeichenliste

- 1: Drehtischsystem
- 2: Bearbeitungs- und Handlingseinheit
- 3: Trommelkurve
- 3.1: Gewindegang
- 4: Mitnehmer
- 5: Gehäuse
- 6: Drehkörper
- 7: Antrieb
- 7.1: Stator
- 7.2: Rotor
- 8: Antriebsteil
- 8.1: Hohlwellenelement
- 8.2: Durchgangsöffnung
- 9: Abtriebsteil
- 9.1: Öffnung
- 10: Lageranordnung
- 11: erster Lagerring
- 12: zweiter Lagerring
- 13: Befestigungsabschnitt
- 14: Aufnahme
- 16: Adaptereinrichtung
- 17: Gehäusering
- 18: Lager
- 19: Wellenmutter
- 20: Permanentmagnet
- 21: Spule
- 22: Nocke
- 23: Magnet
- 25: Spanneinrichtung
- 26: Eingriffselement
- 27: Ausnehmung
- 28: Federelement
- 29: Spannelement

- AD: Außendurchmesser
- TA: Trommelachse
- DA: Drehachse Drehkörper
- L: Länge Rotor
- D: Durchmesser Drehkörper
- EL: Engerieversorgungsleitung
- ID: Innendurchmesser
- OS: Oberseite
- DE1: erste Drehebene
- DE2: zweite Drehebene
- WK: Wälzkörper
- SP: Spannposition
- FP: Freigabeposition

## Patentansprüche

1. Drehvorrichtung zur Aufnahme von wenigstens einer Bearbeitungs- und/oder Handlingseinheit (2), umfassend einen um eine Drehachse (DA) drehbar angeordneten Drehkörper (6) zur Aufnahme der zumindest einen Bearbeitungs- und/oder Handlingseinheit (2), wobei der Drehkörper (6) zur Einleitung einer Drehbewegung über mehrere Mitnehmer (4) mit einer wendelförmigen Trommelkurve (3) in Eingriff bringbar ist, und wobei ein Antrieb (7) vorgesehen ist, der die Trommelkurve (3) direkt oder indirekt um eine Trommelachse (TA) motorisch antreibt, und wobei der Drehkörper (6) zumindest ein Antriebsteil (8) und ein relativ zu dem Antriebsteil (8) um die Drehachse (DA) drehbares Abtriebsteil (9) aufweist, wobei das Antriebsteil (8) über mehrere Spanneinrichtungen (25) mit dem Abtriebsteil (9) lösbar koppelbar ausgebildet ist, **dadurch gekennzeichnet, dass** die Spanneinrichtungen (25) ein Eingriffselement (26) aufweisen, das in der Spannposition (SP) unter einer einstellbaren Vorspannung in koppelndem Wirkeingriff mit einer an dem Außenumfang des Antriebsteils (8) vorgesehenen Ausnehmung (27) bringbar ist, wobei die Spanneinrichtungen (25) zur Erzeugung der einstellbaren Vorspannung ein auf das Eingriffselement (26) wirkendes Federelement (28) aufweisen, das über ein Spannelement (29) verstellbar vorspannbar ist, und dass bei einer jeden der mehreren Spanneinrichtungen (25) das Auslösemoment, bei dem die jeweilige Spanneinrichtung (25) von der Spannposition (SP) in die Freigabeposition (FP) schaltet, separat einstellbar ist.

2. Drehvorrichtung nach Anspruch 1, **dadurch gekennzeichnet, dass** die zumindest eine Spanneinrichtung (25) zwischen einer Spannposition (SP) und einer Freigabeposition (FP) verstellbar ist, wobei die Spanneinrichtung (25) in der Spannposition (SP) das Abtriebsteil (9) drehfest mit dem Antriebsteil (8) koppelt und in der Freigabeposition (FP) das Abtriebsteils (9) von dem Antriebsteil (8) um die gemeinsame Drehachse (DA) drehfrei gibt.

3. Drehvorrichtung nach Anspruch 1 oder 2, **dadurch gekennzeichnet, dass** bei der zumindest einen Spanneinrichtung (25) das Auslösemoment, bei dem die Spanneinrichtung (25) von der Spannposition (SP) in die Freigabeposition (FP) schaltet, einstellbar ausgebildet ist.

4. Drehvorrichtung nach einem der vorhergehenden Ansprüche, **dadurch gekennzeichnet, dass** das Antriebsteil (8) und das Abtriebsteil (9) jeweils kreisringförmig ausgebildet ist und dass das Antriebsteil (8) und das Abtriebsteil (9) koaxial um eine gemeinsame Drehachse (DA) unabhängig voneinander in der Freigabeposition (FP) drehbar angeordnet sind.

5. Drehvorrichtung nach einem der vorhergehenden Ansprüche, **dadurch gekennzeichnet, dass** der Drehkörper (6) an einer Oberseite (OS) des Antriebsteils (8) eine erste Drehebene (DE1) und an der Oberseite (OS) des Abtriebsteils (9) eine zweite Drehebene (DE2) ausbildet, wobei die erste Drehebene (DE1) vorzugsweise parallel beabstandet zu der zweiten Drehebene (DE2) vorgesehen ist.

6. Drehvorrichtung nach einem der vorhergehenden Ansprüche, **dadurch gekennzeichnet, dass** das Antriebsteils (8) an einem ersten Ende eines Hohlwellenelement (8.1) um die Drehachse (DA) drehbar gelagert aufgenommen ist, wobei das Hohlwellenelement (8.1) sich zylindrisch entlang der Drehachse (DA) erstreckt und mittels einer an einer dem ersten Ende gegenüberliegenden zweiten Ende fest mit einem Gehäuse (5) der Drehvorrichtung (1) verbunden ist.

7. Drehvorrichtung nach Anspruch 6, **dadurch gekennzeichnet, dass** das Hohlwellenelement (8.1) eine zentrische Durchgangsöffnung (8.2) aufweist, durch die Energieversorgungsleitungen (EL) an die an dem Abtriebsteil (9) vorgesehenen Bearbeitungs- und/oder Handlingseinheit (2) geführt werden können.

8. Drehvorrichtung nach einem der vorhergehenden Ansprüche, **dadurch gekennzeichnet, dass** zwischen dem Antriebsteil (8) und dem Abtriebsteil (9) eine Lageranordnung (10) vorgesehen ist, so dass das Abtriebsteil (9) in der ausgekoppelten Freigabeposition (FP) der zumindest einen Spanneinrichtung (25) relativ zu dem Antriebsteil (8) um die Drehachse (DA) unabhängig von dem Antriebsteil (8) drehbar ausgebildet ist.

9. Drehvorrichtung nach Anspruch 8, **dadurch gekennzeichnet, dass** die Lageranordnung (10) außenumfangsseitig an dem Antriebsteil (8) einen ersten Lagerring (11), innenumfangsseitig an dem Abtriebsteil (9) einen zweiten Lagerring (12) sowie einen zwischen dem ersten und dem zweiten Lagerring (11, 12) angeordneten Wälzkörper (WK) aufweist.

10. Drehvorrichtung nach einem der vorhergehenden Ansprüche, **dadurch gekennzeichnet, dass** über die verstellbare Vorspannung des Federelements (28) das in der Spannposition (SP) übertragbare Drehmoment zwischen dem Antriebteil (8) und dem Abtriebsteil (9) einstellbar ist und somit das Auslösemoment eingestellt wird, bei dem die Spanneinrichtung (25) von der Spannposition (SP) in die Freigabeposition (FP) schaltet.

11. Drehvorrichtung nach einem der vorhergehenden Ansprüche, **dadurch gekennzeichnet, dass** die mehreren Spanneinrichtungen (25) jeweils identisch zueinander ausgebildet sind.

12. Drehvorrichtung nach einem der vorhergehenden Ansprüche, **dadurch gekennzeichnet, dass** die mehreren Spanneinrichtungen (25) derart um die Drehachse (DA) verteilt angeordnet sind, dass sich eine eindeutige relative Drehposition des Antriebsteils (8) gegenüber dem Abtriebsteil (9) einstellt, bei der sämtliche Spannvorrichtungen (25) von ihrer Freigabeposition (FP) in ihre entsprechende Spannposition (SP) verstellbar sind.

13. Drehvorrichtung nach einem der vorhergehenden Ansprüche, **dadurch gekennzeichnet, dass** sich je relativer Umdrehung von 360° Grad des Abtriebsteils (9) gegenüber dem Antriebsteil (8) eine einzige eindeutige Drehposition einstellt, bei der sämtliche Spannvorrichtungen (25) von ihrer Freigabeposition (FP) in ihre entsprechende Spannposition (SP) verstellbar sind.

14. Drehvorrichtung nach einem der vorhergehenden Ansprüche, **dadurch gekennzeichnet, dass** das Antriebsteil (8), das Abtriebsteil (9) sowie die zumindest eine Spanneinrichtung (25) als in sich abgeschlossene Baugruppe ausbildet ist.

## Claims

1. Rotating device for receiving at least one processing and/or handling unit (2), comprising a rotary body (6) arranged so as to be rotatable about an axis of rotation (DA) for receiving the at least one processing and/or handling unit (2), wherein the rotary body (6) can be brought into engagement with a helical barrel cam (3) by means of a plurality of followers (4) so as to induce a rotary movement, and wherein a drive (7) is provided which drives the barrel cam (3) directly or indirectly about a barrel axis (TA) by means of a motor, and wherein the rotary body (6) comprises at least one driving part (8) and one driven part (9) that is rotatable relative to the driving part (8) about the axis of rotation (DA), wherein the driving part (8) is designed to be releasably couplable to the driven part (9) via a plurality of clamping mechanisms (25), **characterised in that** the clamping mechanisms (25) comprise an engagement element (26) which, in the clamping position (SP),under an adjustable preload, can be brought into an effective coupling engagement with a recess (27) provided on the outer perimeter of the driving part (8), wherein the clamping mechanisms (25) comprise, for generating the adjustable preload, a spring element (28) which acts on the engagement element (26) and which can be adjustably preloaded by means of a tensioning element (29), and **in that** the disengaging torque at which the respective clamping mechanism (25) switches from the clamping position (SP) to the release position (FP) can be set separately for each of the plurality of clamping mechanisms (25).

2. Rotating device according to claim 1, **characterised in that** the at least one clamping mechanism (25) is movable between a clamping position (SP) and a release position (FP), wherein the clamping mechanism (25) couples the driven part (9) to the driving part (8) in a rotationally fixed manner in the clamping position (SP) and releases, in the release position (FP), the driven part (9) from the driving part (8) for free rotation about the common axis of rotation (DA).

3. Rotating device according to claim 1 or 2, **characterised in that**, for the at least one clamping mechanism (25), the disengaging torque at which the clamping mechanism (25) switches from the clamping position (SP) to the release position (FP) is designed to be adjustable.

4. Rotating device according to one of the preceding claims, **characterised in that** the driving part (8) and the driven part (9) are respectively designed to have an annular shape and **in that** the driving part (8) and the driven part (9) are arranged coaxially about a common axis of rotation (DA) so as to be rotatable independently of each other in the release position (FP).

5. Rotating device according to one of the preceding claims, **characterised in that** the rotary body (6) forms a first plane of rotation (DE1) on an upper side (OS) of the driving part (8) and a second plane of rotation (DE2) on the upper side (OS) of the driven part (9), wherein the first plane of rotation (DE1) is preferably provided so as to be parallel to and spaced apart from the second plane of rotation (DE2).

6. Rotating device according to one of the preceding claims, **characterised in that** the driving part (8) is rotatably mounted at a first end of a hollow shaft element (8.1) about the axis of rotation (DA), wherein the hollow shaft element (8.1) extends cylindrically along the axis of rotation (DA) and is connected in a fixed manner to a housing (5) of the rotating device (1) by means of a second end opposite the first end.

7. Rotating device according to claim 6, **characterised in that** the hollow shaft element (8.1) comprises a central through-hole (8.2) through which power supply lines (EL) can be conducted to the processing and/or handling unit (2) provided on the driven part (9).

8. Rotating device according to one of the preceding claims, **characterised in that** a bearing arrangement (10) is provided between the driving part (8) and the driven part (9) so that in the uncoupled release position (FP) of the at least one clamping mechanism (25), the driven part (9) is configured to be rotatable relative to the driving part (8) about the axis of rotation (DA) independently of the driving part (8).

9. Rotating device according to claim 8, **characterised in that** the bearing arrangement (10) comprises a first bearing ring (11) on the driving part (8) on the side of its outer perimeter, a second bearing ring (12) on the driven part (9) on the side of its inner perimeter, and a rolling body (WK) arranged between the first and second bearing rings (11, 12).

10. Rotating device according to one of the preceding claims, **characterised in that** the torque that is transmissible in the clamping position (SP) between the driving part (8) and the driven part (9) can be set via the adjustable preload of the spring element (28), whereby the disengaging torque is set at which the clamping mechanism (25) switches from the clamping position (SP) to the release position (FP).

11. Rotating device according to one of the preceding claims, **characterised in that** the plurality of clamping mechanisms (25) are respectively designed so as to be identical to one another.

12. Rotating device according to one of the preceding claims, **characterised in that** the plurality of clamping mechanisms (25) are arranged so as to be distributed around the axis of rotation (DA) so as to form a distinct relative rotational position of the driving part (8) relative to the driven part (9) in which all clamping mechanisms (25) can be moved from their release position (FP) into their corresponding clamping position (SP).

13. Rotating device according to one of the preceding claims, **characterised in that**, for every relative rotation of 360° of the driven part (9) relative to the driving part (8), a single distinct rotational position is formed in which all clamping mechanisms (25) can be moved from their release position (FP) to their corresponding clamping position (SP).

14. Rotating device according to one of the preceding claims, **characterised in that** the driving part (8), the driven part (9) and the at least one clamping mechanism (25) are designed as a self-contained assembly.

## Revendications

1. Dispositif de rotation, destiné à recevoir au moins une unité d'usinage et / ou de manipulation (2), comprenant un corps de rotation (6), placé en étant rotatif autour d'un axe de rotation (DA), destiné à recevoir l'au moins une unité d'usinage et / ou de manipulation (2), dans lequel le corps de rotation (6) est susceptible d'être amené en engagement par l'intermédiaire de plusieurs entraîneurs (4) avec un tambour à came (3) de forme hélicoïdale pour induire un déplacement en rotation, et dans lequel un entraînement (7) est prévu, qui entoure directement ou indirectement par moteur le tambour à came (3) autour d'un axe de tambour (TA) et dans lequel le corps de rotation (6) comporte au moins une partie d'entraînement (8) et une partie de sortie (9) rotative autour de l'axe de rotation (DA) par rapport à la partie d'entraînement (8), la partie d'entraînement (8) étant conçue en étant susceptible d'être accouplée de manière amovible par l'intermédiaire de plusieurs systèmes de serrage (25) avec la partie de sortie (9), **caractérisé en ce que** les systèmes de serrage (25) comportent un élément d'engagement (26), qui dans la position de serrage (SP) est susceptible d'être amené sous une précontrainte réglable en engagement actif d'accouplement avec un évidement (27) prévu sur la périphérie extérieure de la partie d'entraînement (8), pour générer la précontrainte réglable, les systèmes de serrage (25) comportant un élément à ressort (28) agissant sur l'élément d'engagement (26), qui est susceptible d'être précontraint de manière réglable par l'intermédiaire d'un élément de serrage (29) et **en ce que** sur chacun des plusieurs systèmes de serrage (25), le couple de déclenchement, auquel le système de serrage (25) commute de la position de serrage (SP) dans la position de libération (FP) est réglable séparément.

2. Dispositif de rotation selon la revendication 1, **caractérisé en ce que** l'au moins un système de serrage (25) est ajustable entre une position de serrage (SP) et une position de libération (FP), dans la position de serrage (SP), le système de serrage (25) accouplant la partie de sortie (9) de manière solidaire en rotation avec la partie d'entraînement (8) et dans la position de libération (FP), libérant la partie de sortie (9) de la partie d'entraînement (8) d'une rotation autour de l'axe de rotation (DA) commun.

3. Dispositif de rotation selon la revendication 1 ou 2, **caractérisé en ce que** sur l'au moins un système de serrage (25), le couple de déclenchement auquel le système de serrage (25) commute de la position de serrage (SP) dans la position de libération (FP) est conçu de manière réglable.

4. Dispositif de rotation selon l'une quelconque des revendications précédentes, **caractérisé en ce que** la partie d'entraînement (8) et la partie de sortie (9) sont conçues chacune en forme d'anneau circulaire et **en ce que** la partie d'entraînement (8) et la partie de sortie (9) sont placées en étant rotatives de manière coaxiale autour d'un axe de rotation (DA) commun, indépendamment l'une de l'autre, dans la position de libération (FP).

5. Dispositif de rotation selon l'une quelconque des revendications précédentes, **caractérisé en ce que** sur une face supérieure (OS) de la partie d'entraînement (8), le corps de rotation (6) constitue un premier plan de rotation (DE1) et sur la face supérieure (OS) de la partie de sortie (9), constitue un deuxième plan de rotation (DE2), le premier plan de rotation (DE1) étant prévu en étant écarté de préférence à la parallèle du deuxième plan de rotation (DE2).

6. Dispositif de rotation selon l'une quelconque des revendications précédentes, **caractérisé en ce que** la partie d'entraînement (8) est réceptionnée en logement rotatif autour de l'axe de rotation (DA) sur une première extrémité d'un élément d'arbre creux (8.1), l'élément d'arbre creux (8.1) s'étendant sous forme cylindrique le long de l'axe de rotation (DA) et sur une deuxième extrémité opposée à la première extrémité, étant fixement assemblé avec un carter (5) du dispositif de rotation (1).

7. Dispositif de rotation selon la revendication 6, **caractérisé en ce que** l'élément d'arbre creux (8.1) comporte un orifice de passage (8.2) centré, à travers lequel des conduites d'alimentation (EL) en énergie peuvent être tirées vers l'unité d'usinage et / ou de manipulation (2) prévue sur la partie de sortie (9).

8. Dispositif de rotation selon l'une quelconque des revendications précédentes, **caractérisé en ce qu'**entre la partie d'entraînement (8) et la partie de sortie (9) est prévu un agencement de paliers (10), de sorte que dans la position de libération (FP) désaccouplée de l'au moins un système de serrage (25) par rapport à la partie d'entraînement (8), la partie de sortie (9) soit conçue en étant rotative autour de l'axe de rotation (DA) indépendamment de la partie d'entraînement (8).

9. Dispositif de rotation selon la revendication 8, **caractérisé en ce que** l'agencement de paliers (10) comporte sur le côté de la périphérie extérieure sur la partie d'entraînement (8) une première bague de roulement (11), sur le côté de la périphérie intérieure sur la partie de sortie (9) une deuxième bague de roulement (12), ainsi qu'un corps de roulement (WK), placé entre la première et la deuxième bagues de roulement (11, 12).

10. Dispositif de rotation selon l'une quelconque des revendications précédentes, **caractérisé en ce que** par l'intermédiaire de la précontrainte ajustable de l'élément à ressort (28), le couple de rotation transmissible dans la position de serrage (SP) entre la partie d'entraînement (8) et la partie de sortie (9) est réglable et ainsi, le couple de déclenchement auquel le système de serrage (25) commute de la position de serrage (SP) dans la position de libération (FP) se règle.

11. Dispositif de rotation selon l'une quelconque des revendications précédentes, **caractérisé en ce que** les plusieurs systèmes de serrage (25) sont chacun conçus à l'identique les uns des autres.

12. Dispositif de rotation selon l'une quelconque des revendications précédentes, **caractérisé en ce que** les plusieurs systèmes de serrage (25) sont placés en distribution autour de l'axe de rotation (DA) de telle sorte qu'il se règle une position en rotation relative univoque de la partie d'entraînement (8) par rapport à la partie de sortie (9), dans laquelle tous les dispositifs de serrage (25) sont ajustables de leur position de libération (FP) dans leur position de serrage (SP) correspondante.

13. Dispositif de rotation selon l'une quelconque des revendications précédentes, **caractérisé en ce qu'**à chaque rotation relative de 360° degrés de la partie de sortie (9) par rapport à la partie d'entraînement (8), il se règle une unique position en rotation univoque, dans laquelle tous les dispositifs de serrage (25) sont ajustables de leur position de libération (FP) dans leur position de serrage (SP) correspondante.

14. Dispositif de rotation selon l'une quelconque des revendications précédentes, **caractérisé en ce que** la partie d'entraînement (8), la partie de sortie (9), ainsi que l'au moins un système de serrage (25) sont conçus sous la forme d'un module autonome.
